# EUROPÄISCHE PATENTANMELDUNG

(11) **EP 0 952 380 A2**
(43) Veröffentlichungstag der Anmeldung: **27.10.1999**
(21) Anmeldenummer: 99107603.5
(22) Anmeldetag: 16.04.1999
(51) Int. Cl.: F16L 35/00

(54) **Knickschutz-Vorrichtung für eine Anschlussarmatur einer flexiblen Schlauchleitung**

(30) Priorität: 21.04.1998 DE 29807233 U
(71) Anmelder: Schulz, H., Dipl.-Ing. HDS Hydraulik GmbH & CO. KG., 51647 Gummersbach (DE)
(72) Erfinder: Schulz, Rüdiger, 48161 Münster-Nienberge (DE)
(74) Vertreter: Patentanwälte Dr. Solf & Zapf

(57) **Zusammenfassung**

Die Erfindung betrifft eine Knickschutz-Vorrichtung für eine Anschlußarmatur einer flexiblen Schlauchleitung (1), mit einem hülsenförmigen Knickschutzteil (2), wobei die Anschlußarmatur ein Armaturinnenteil (3) und ein daran befestigtes Armaturaußenteil (4) aufweist, zwischen denen ein Ende (1a) der Schlauchleitung (1) kraftformschlüssig befestigt ist. Das Knickschutzteil (2) ist dabei über einen an seinem einen Ende befindlichen, das Armaturaußenteil (4) zumindest teilweise umgreifenden Befestigungsabschnitt (5) am Armaturaußenteil (4) form- und/oder kraftformschlüssig befestigt und weist an seinem anderen Ende einen Knickschutzabschnitt (6) zum Umschließen der Schlauchleitung (1) auf, der beim Umschließen einen in axialer Richtung (A) der Schlauchleitung (1) offenen, die Schlauchleitung (1) umgebenden Ringraum (7) umfaßt. Zum Zwecke einer höheren Verschleißsicherheit ist in den Ringraum (7) ein ringförmiges, elastisch deformierbares Zwischenteil (8) drucklos einlegbar.

## Beschreibung

Die vorliegende Erfindung betrifft eine knickschutz-Vorrichtung für eine Anschlußarmatur einer flexiblen Schlauchleitung, mit einem hülsenförmigen knickschutzteil, wobei die Anschlußarmatur ein Armaturinnenteil und ein daran befestigtes Armaturaußenteil aufweist, zwischen denen ein Ende der Schlauchleitung kraftformschlussig befestigt ist, und wobei das Knickschutzteil über einen an seinem einen Ende befindlichen, das Armaturaußenteil zumindest teilweise umgreifenden Befestigungsabschnitt am Armaturaußenteil form- und/oder kraftformschlüssig befestigt ist und an seinem anderen Ende einen Knickschutzabschnitt zum Umschließen der Schlauchleitung aufweist, der beim Umschließen einen in axialer Richtung der Schlauchleitung offenen, das Schlauchmaterial umgebenden Ringraum umfaßt.

Derartige Knickschutz-Vorrichtungen dienen, insbesondere in pneumatischen und hydraulischen Maschinen und Anlagen, zur Verhinderung von Leitungsschäden und von Betriebsstörungen. Armaturen, d.h. Anschlußstücke, mit bekannten Knickschutz-Vorrichtungen werden bereits beim Anschluß von Höchstdruck-Schlauchleitungen eingesetzt. Bei dem hülsenförmigen Knickschutzteil, welcher bei der bekannten Knickschutz-Vorrichtung einendig mit seinem Befestigungsabschnitt auf das Armaturaußenteil aufpreßbar ist, besitzt der Knickschutzabschnitt eine sich in axialer Richtung der flexiblen Schlauchleitung trichterförmig erweiternde Gestalt und läßt auf diese Weise eine knickbegrenzte Biegung der flexiblen Schlauchleitung zu, wobei die Schlauchleitung an der inneren Trichterwandung zur Anlage kommt. Die bekannten Knickschutz-Vorrichtungen haben sich hinsichtlich ihrer Funktionserfüllung in der Praxis zwar als vorteilhaft erwiesen, nachteilig ist jedoch, daß es bei den Knickbewegungen der flexiblen Schlauchleitung, wenn diese häufig auftreten, durch die Reibung der Schlauchleitung im inneren Bereich des Trichterauslaufs des Knickschutzteiles zu einem Abrieb des Schlauchobergummis der Schlauchleitung kommen kann, welcher schließlich zu einer völligen Zerstörung derselben führt.

Der vorliegenden Erfindung liegt daher die Aufgabe zugrunde, eine Knickschutz-Vorrichtung der eingangs beschriebenen Art derart zu verbessern, daß sie bei unbeeinträchtigter Funktionserfüllung eine höhere Verschleißsicherheit der flexiblen Schlauchleitung gewährleistet und deren Abknicken hinter der Armatur völlig verhindert.

Diese Aufgabe wird mit einer Knickschutz-Vorrichtung der eingangs genannten Art gelöst, die ein in den Ringraum drucklos einlegbares, elastisch deformierbares ringförmiges Zwischenteil aufweist.

Das erfindungsgemäß vorgesehene Zwischenteil besitzt dabei vorteilhafterweise sowohl eine Versteifungswirkung für die Schlauchleitung als auch eine Dämpfungswirkung bei Biegebewegungen, die insbesondere im Hinblick auf die auftretenden Radialkraftkomponenten der Biegekräfte in Erscheinung tritt. Durch diese Dämpfung wird bei Biegebewegungen eine Anlage der Schlauchleitung am Knickschutzteil völlig verhindert.

In einer bevorzugten Ausbildung kann das Knickschutzteil einen, im Montagezustand das Zwischenteil gegen eine axiale Verschiebung aus dem Ringraum sichernden, im Knickschutzabschnitt befindlichen Anschlag, insbesondere einen radial einwärts gerichteten Bund, aufweisen, wobei zwischen dem Bund und der Schlauchleitung im Montagezustand ein in axialer Richtung der Schlauchleitung offener Ringspalt gebildet ist. Zwischen der Schlauchleitung und dem Bund verbleibt ein Ringspalt, so daß sich die Schlauchleitung wie bei der bekannten Knickschutz-Vorrichtung radial und axial bewegen kann. Durch die Versteifungs- und Dämpfungswirkung des Zwischenteiles wird bei den auftretenden Biegekräften eine Anlage am Bund jedoch verhindert und die im Betrieb auftretende Biegebelastung direkt hinter der Schlaucharmatur vermieden.

Weitere vorteilhafte Ausführungen der Erfindung sind in den Unteransprüchen und der nachfolgenden speziellen Beschreibung enthalten.

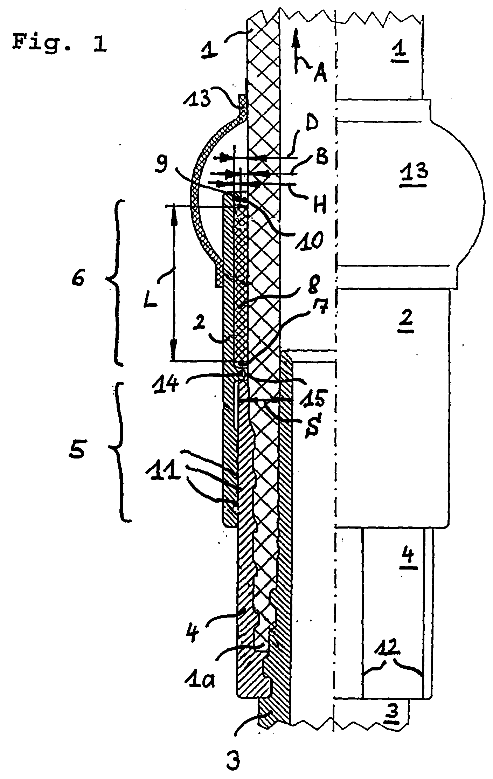

Anhand eines in der beiliegenden Zeichnung dargestellten Ausführungsbeispiels wird die Erfindung näher erläutert. Dabei zeigt die einzige Fig. 1 eine zur Hälfte längs geschnittene Darstellung einer flexiblen Schlauchleitung mit einer Anschlußarmatur und einer erfindungsgemäßen Knickschutz-Vorrichtung.

Wie aus Fig. 1 hervorgeht, ist eine erfindungsgemäße Knickschutz-Vorrichtung für eine Anschlußarmatur einer flexiblen Schlauchleitung 1, vorzugsweise einer Höchstdruck-Schlauchleitung, bestimmt. Sie weist ein hülsenförmiges Knickschutzteil 2 auf. Eine typische Nennweite der Schlauchleitung 1 liegt beispielsweise bei 50 mm. Die in der Schlauchleitung 1 strömenden Medien, vornehmlich Hydrauliköle, können z.B. unter einem Betriebsdruck von etwa 400 bar stehen. Um den erforderlichen Platzdruck bei vierfacher Sicherheit zum Betriebsdruck zu gewährleisten, der im Bereich von etwa 1600 bar liegen kann, sind derartige Höchstdruck-Leitungen, die üblicherweise aus einem Elastomer (Innen- und Außengummi) bestehen, mit vier bis sechs metallischen Drahteinlagen versehen.

Die als Ganzes nicht näher bezeichnete Anschlußarmatur weist ein Armaturinnenteil 3 und ein daran befestigtes Armaturaußenteil 4 auf, zwischen denen ein Ende 1a der Schlauchleitung 1 kraftformschlüssig befestigt ist. Das Knickschutzteil 2 ist über einen an seinem einen Ende befindlichen, das Armaturaußenteil 4 zumindest teilweise umgreifenden Befestigungsabschnitt 5 am Armaturaußenteil 4 form- und/oder kraftformschlüssig befestigt. An seinem anderen Ende weist das Knickschutzteil 2 einen Knickschutzabschnitt 6 zum Umschließen der Schlauchleitung 1 auf. Dieser Knickschutzabschnitt 6 umfaßt beim Umschließen der Schlauchleitung 1 einen in axialer Richtung (Pfeil A) der Schlauchleitung 1 offenen, die Schlauchleitung 1 umgebenden Ringraum 7.

Erfindungsgemäß ist ein bei der Montage in den Ringraum 7 drucklos - d.h. ohne Vorspannung - einlegbares, ringförmiges, elastisch deformierbares Zwischenteil 8 vorgesehen. Wie bereits erwähnt, besitzt das Zwischenteil 8 eine Versteifungswirkung für die Schlauchleitung 1 und eine Dämpfungswirkung bei auftretenden Biegebewegungen. Wie dargestellt - befindet sich dieses Zwischenteil 8 vollständig im Ringraum 7 zwischen der Schlauchleitung 1 und dem Knickschutzteil 2.

In der hier dargestellten bevorzugten Ausführung weist die erfindungsgemäße Knickschutz-Vorrichtung einen im Knickschutzabschnitt 6 befindlichen, den Ringraum 7 begrenzenden, im Montagezustand das Zwischenteil 8 gegen eine axiale Verschiebung aus dem Ringraum 7 sichernden, radial einwärts gerichteten Bund 9 auf. Zwischen dem Bund 9 und der Schlauchleitung 1 ist im Montagezustand ein in axialer Richtung A der Schlauchleitung 1 offener Ringspalt 10 gebildet, der ein seitliches Auslenken der Schlauchleitung 1 ermöglicht.

Die Breite B des Ringspaltes 10 und die Höhe H des Bundes 9 können mit Vorteil in Bezug zur Dicke D des Zwischenteiles 8 unter Beachtung der Verformbarkeit des Zwischenteiles 8 und der möglichen in axialer Richtung A auftretenden Kraftkomponenten derart dimensioniert sein, daß sowohl ein axiales Auswandern des Zwischenteiles als auch bei maximalen Biegekräften eine Anlage der Schlauchleitung 1 am Bund 9 verhindert wird. Zu diesem Zweck sollte die Höhe H des Bundes 9 mindestens der halben Dicke D des Zwischenteiles 8 entsprechen.

Im Sinne einer noch höheren Verschleißsicherheit der Schlauchleitung 1 ist es des weiteren von Vorteil, wenn - wie Fig. 1 zeigt - der Bund 9 an seinen radial einwärts gerichteten, nicht näher bezeichneten Oberkanten abgerundet ist.

Um eine optimale Versteifungswirkung zu erzielen, sollte die axiale Länge L des Zwischenteiles 8 größer als die doppelte, vorzugsweise größer als die dreifache, Summe S der mittleren Dickenabmessungen des Armaturinnenteils 3, des Armaturaußenteils 4 und der Schlauchleitung 1 sein.

Hinsichtlich des geforderten Dämpfungsverhaltens, bzw. des notwendigen Elastizitätsmoduls und der Druckfestigkeit, hat es sich als günstig gezeigt, für das Zwischenteil 8 einen elastomeren Werkstoff einzusetzen. Im Hinblick auf den Einsatzbereich der erfindungsgemäßen Knickschutz-Vorrichtung, beispielsweise in Großbaggern, sollte dieses Material witterungs-, alterungs-, ozon-, öl- und im Bereich von etwa - 40 bis etwa + 120 °C temperaturbeständig sein. Diese Forderungen erfüllt insbesondere ein Chlor-Butadien-Copolymerisat bzw. Chloropren-Kautschuk (CR), wie Baypren® oder Neoprene®.

Das Knickschutzteil 2 kann mit Vorteil als ein aus Metall bestehendes Präzisionsdrehteil ausgeführt sein und zur kraftformschlüssigen Verbindung mit dem Armaturaußenteil 4 am Innenumfang seines Befestigungsabschnittes 5 scharfkantige Nuten 11 aufweisen, die auf der Schlauchfassung, d.h. dem Armaturaußenteil 4, einen festen Preßsitz ermöglichen.

Zu dem gleichen Zweck kann das Armaturaußenteil 4 am Außenumfang in axialer Richtung verlaufende Kanten 12 aufweisen. Derartige Kanten können durch ein Preßwerkzeug entstehen und erhöhen die Sicherheit gegen ein gegenseitiges Abrutschen von Knickschutzteil 2 und Armaturaußenteil 4.

Um das Eindringen von Staub oder feinkörnigen Partikeln zu verhindern kann eine manschettenartige Abdeckkappe 13 vorgesehen sein, die vorzugsweise aus geeignetem Gummi bestehen kann und die einerseits das Knickschutzteil 2 und andererseits die Schlauchleitung 1 jeweils an ihrem Außenumfang umfaßt.

Bei der oben beispielhaft genannten Höchstdruck-Schlauchleitung DN 50 mm ist ein Biegeradius von 640 mm problemlos realisierbar. Die Erfindung beschränkt sich jedoch nicht auf das beschriebene Ausführungsbeispiel, sondern umfaßt auch alle im Sinne der Erfindung gleichwirkenden Ausführungen. So fällt es beispielsweise auch in den Rahmen der Erfindung, wenn das Zwischenteil 8 in axialer Richtung A der Schlauchleitung 1 aus dem Ringraum 7 herausragt. Eine solche Ausführung ist auch mit dem dargestellten Bund 9 vereinbar, indem am Außenumfang des Zwischenteiles 8 eine Nut vorgesehen sein kann. Es kann in diesem Fall dann auch zwischen dem Bund 9 und dem Zwischenteil ein entsprechender Ringspalt 10 gebildet sein.

Ferner ist eine Variante ohne Abschlußbund 9, mit einem Zwischenteil 8 eingeschlossen, welches in freiem Auslauf über die Begrenzung des Knickschutzteiles 2 hinausläuft und drucklos auf der Schlauchleitung 1 aufliegt.

Ebenso bestehen vielfältige Möglichkeiten, die dem Fachmann zur weiteren Gestaltung des Knickschutzteiles 2 zur Verfügung stehen. So ist der zeichnerischen Darstellung beispielsweise zu entnehmen, daß sich zwischen dem Befestigungsabschnitt 5 und Knickschutzabschnitt 6 ein weiterer den Ringraum 7 begrenzender, im Montagezustand die axiale Verschiebung des Zwischenteiles 8 begrenzender, radial einwärts gerichteter Bund 14 befindet. Dieser Bund 14 dient auch als Anschlag bei der Montage des Knickschutzteiles 2, indem dessen Innendurchmesser vor der Montage kleiner bemessen ist als der Außendurchmesser des jeweiligen Armaturaußenteils 4 in bereits montiertem Zustand. Auch zwischen diesem Bund 14 und der Schlauchleitung 1 ist im Montagezustand ein Ringspalt 15 gebildet.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Schlauchleitung
- 1a: Ende von 1
- 2: Knickschutzteil
- 3: Armaturinnenteil
- 4: Armaturaußenteil
- 5: Befestigungsabschnitt von 2
- 6: Knickschutzabschnitt von 2
- 7: Ringraum zwischen 1 und 2
- 8: Zwischenteil
- 9: Bund an 2 im Bereich von 6
- 10: Ringspalt zwischen 1 und 9
- 11: Nuten an 2 im Bereich von 5
- 12: Außenkanten an 4
- 13: Abdeckkappe
- 14: Bund an 2 zwischen 5 und 6
- 15: Ringspalt zwischen 1 und 14

- A: Richtungspfeil axial in Richtung 1
- B: Breite von 10
- D: Dicke von 8
- H: Höhe von 9
- L: Länge von 8
- S: Summe der mittleren Dickenabmessungen von 3, 4 und 1

## Patentansprüche

1. Knickschutz-Vorrichtung für eine Anschlußarmatur einer flexiblen Schlauchleitung (1), mit einem hülsenförmigen Knickschutzteil (2), wobei die Anschlußarmatur ein Armaturinnenteil (3) und ein daran befestigtes Armaturaußenteil (4) aufweist, zwischen denen ein Ende (1a) der Schlauchleitung (1) kraftformschlüssig befestigt ist, und wobei das Knickschutzteil (2) über einen an seinem einen Ende befindlichen, das Armaturaußenteil (4) zumindest teilweise umgreifenden Befestigungsabschnitt (5) am Armaturaußenteil (4) form- und/oder kraftformschlüssig befestigt ist und an seinem anderen Ende einen Knickschutzabschnitt (6) zum Umschließen der Schlauchleitung (1) aufweist, der beim Umschließen einen in axialer Richtung (A) der Schlauchleitung (1) offenen, die Schlauchleitung (1) umgebenden Ringraum (7) umfaßt,
**gekennzeichnet durch** ein in den Ringraum (7) drucklos einlegbares, ringförmiges, elastisch deformierbares Zwischenteil (8).

2. Knickschutz-Vorrichtung nach Anspruch 1,
**dadurch gekennzeichnet,** daß das Zwischenteil (8) in axialer Richtung (A) der Schlauchleitung (1) aus dem Ringraum (7) herausragt.

3. Knickschutz-Vorrichtung nach Anspruch 1 oder 2,
**gekennzeichnet durch** einen im Knickschutzabschnitt (6) befindlichen, den Ringraum (7) begrenzenden, im Montagezustand das Zwischenteil (8) gegen eine axiale Verschiebung aus dem Ringraum (7) sichernden, radial einwärts gerichteten Bund (9), wobei zwischen dem Bund (9) und der Schlauchleitung (1) im Montagezustand ein in axialer Richtung (A) der Schlauchleitung (1) offener Ringspalt (10) gebildet ist.

4. Knickschutz-Vorrichtung nach Anspruch 3,
**dadurch gekennzeichnet,** daß die Breite (B) des Ringspaltes (10) und die Höhe (H) des Bundes (9) in Bezug zur Dicke (D) des Zwischenteiles (8) derart dimensioniert sind, daß sowohl ein axiales Auswandern des Zwischenteiles (8) als auch bei maximalen Biegekräften eine Anlage der Schlauchleitung (1) am Bund (9) verhindert ist.

5. Knickschutz-Vorrichtung nach Anspruch 3 oder 4
**dadurch gekennzeichnet,** daß die Höhe (H) des Bundes (9) mindestens der halben Dicke (D) des Zwischenteiles (8) entspricht.

6. Knickschutz-Vorrichtung nach einem der Ansprüche 3 bis 5,
**dadurch gekennzeichnet,** daß der Bund (9) an seinen radial einwärts gerichteten Oberkanten abgerundet ist.

7. Knickschutz-Vorrichtung nach einem der Ansprüche 1 bis 6,
**dadurch gekennzeichnet,** daß die axiale Länge (L) des Zwischenteiles (8) größer als die doppelte, vorzugsweise größer als die dreifache, Summe (S) der Dickenabmessungen des Armaturinnenteils (3), des Armaturaußenteils (4) und der Schlauchleitung (1) ist.

8. Knickschutz-Vorrichtung nach einem der Ansprüche 1 bis 7,
**dadurch gekennzeichnet,** daß das Zwischenteil (8) aus einem witterungs-, alterungs-, öl-, ozon- und im Bereich von etwa - 40 bis etwa + 120 °C temperaturbeständigen Elastomer, insbesondere aus einem Chlor-Butadien-Copolymerisat bzw. Chloropren-Kautschuk (CR) besteht.

9. Knickschutz-Vorrichtung nach einem der Ansprüche 1 bis 8,
**dadurch gekennzeichnet,** daß das Knickschutzteil (2) zur kraftformschlüssigen Verbindung mit dem Armaturaußenteil (4) am Innenumfang seines Befestigungsabschnittes (5) scharfkantige Nuten (11) aufweist.

10. Knickschutz-Vorrichtung nach einem der Ansprüche 1 bis 9,
**dadurch gekennzeichnet,** daß das Knickschutzteil (2) als Präzisionsdrehteil ausgeführt ist.

11. Knickschutz-Vorrichtung nach einem der Ansprüche 1 bis 10,
**dadurch gekennzeichnet,** daß das Armaturaußenteil (4) am Außenumfang in axialer Richtung verlaufende Kanten (12) aufweist.

12. Knickschutz-Vorrichtung nach einem der Ansprüche 1 bis 11,
**gekennzeichnet durch** eine manschettenartige Abdeckkappe (13), vorzugsweise aus Gummi, die einerseits das Knickschutzteil (2) und andererseits die Schlauchleitung (1) jeweils an ihrem Außenumfang umfaßt.
